(19) Europäisches Patentamt
European Patent Office
Office européen des brevets

(11) Veröffentlichungsnummer: **0 274 021 B1**

(12) **EUROPÄISCHE PATENTSCHRIFT**

(45) Veröffentlichungstag der Patentschrift: **20.02.91**

(51) Int. Cl.5: **C08F 8/30**, C08C 19/44

(21) Anmeldenummer: **87116297.0**

(22) Anmeldetag: **05.11.87**

(54) **Am Kettenende funktionalisierte Polymere und Verfahren zu ihrer Herstellung.**

(30) Priorität: **20.11.86 DE 3639569**

(43) Veröffentlichungstag der Anmeldung:
**13.07.88 Patentblatt 88/28**

(45) Bekanntmachung des Hinweises auf die Patenterteilung:
**20.02.91 Patentblatt 91/08**

(84) Benannte Vertragsstaaten:
**BE DE FR GB IT NL**

(56) Entgegenhaltungen:
**WO-A-87/02369**
**FR-A- 2 416 940**
**FR-A- 2 525 121**
**US-A- 3 178 398**
**US-A- 3 322 738**

(73) Patentinhaber: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die Erfindung betrifft am Kettenende funktionalisierte Polymere und ein Verfahren zu ihrer Herstellung

Die Herstellung von an Kettenenden funktionalisierten Polymeren wird in den US-Patenten 3 786 116 und 4 544 711 beschrieben.

Im US-Patent 3 786 116 wird Styrol oder Butadien anionisch polymerisiert, anschließend wird das lebende Polymere, gegebenenfalls nach Umsetzung mit Ethylenoxid, mit einem Halogen enthaltenden Reagenz terminiert, das polymerisierbare Doppelbindungen oder andere Endgruppen enthält. Dabei entstehen unter Abspaltung von Alkalihalogenid Polymere mit polymerisierbaren Endgruppen.

Von den beiden beschriebenen Varianten beinhaltet die 1. den Abbruch von Polystyrollithium mit dem Halogen enthaltenden Reagenz, über das die polymerisierbare Endgruppen eingeführt wird, z.B. die Epoxy- oder die Styrylgruppe. Es reagiert das Polystyryllithium jedoch mit den polymerisierbaren Gruppen des Reagenzes ebenso wie mit der Halogengruppe, wobei eine Polymerdimerisierung und andere unerwünschten Nebenreaktionen auftreten.

In der 2. Variante wird das Polystyrylcarbanion zunächst mit einem als Verkappungsreagenz dienenden Alkylenoxid in ein Alkoxidanion umgewandelt und es wird erst dann mit der Halogen enthaltenden Verbindung umgesetzt. Dieses Verfahren hat jedoch den Nachteil, daß eine weniger reaktive Zwischenstufe entsteht, die sich nicht mehr so leicht zum Endprodukt umsetzt.

Im US-Patent 4 544 711 wird das Polystyrylanion statt mit Ethylenoxid zunächst mit dem Verkappungsreagenz Ethylensulfid umgesetzt, bevor man mit dem Halogen enthaltenden Reagenz reagieren läßt. Dabei entsteht als Zwischenprodukt das Lithiumsalz eines Thiolanions des Polymeren. Bei diesem Verfahren ist es jedoch ein Nachteil, daß bei der Umsetzung mit Ethylensulfid erhebliche Anteile von gekuppelten polymeren Nebenprodukten entstehen.

Es ist Aufgabe der Erfindung, diese Nachteile zu vermeiden und zu Polymeren zu gelangen, welche keine Nebenprodukte enthalten.

Diese Aufgabe wurde durch ein Verfahren zur Herstellung von am Kettenende funktionalisierten Polymeren aus durch anionische Polymerisation von olefinisch ungesättigten Monomeren erhaltenen lebenden Polymeren gelöst, bei dem erfindungsgemäß die lebenden Polymeren zunächst mit einem Verkappungsreagens der allgemeinen Formel Ia oder Ib umgesetzt werden

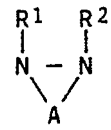 Ia, 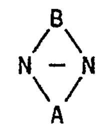 Ib,

worin $R^1$ und $R^2$ ein Alkyl- oder Arylrest, A = eine eingliedrige, gegebenenfalls substituierte Kohlenstoffbrücke und B eine 2- bis 12-gliedrige Brücke ist, von der mindestens die den Stickstoffatomen nächsten Glieder aus -C($R^3$, $R^4$)-Radikalen bestehen, wobei $R^3$ und $R^4$ gleich oder verschieden sein können und Wasserstoff, Alkyl-, Cycloalkyl- oder Arylreste sind, und die entfernteren Glieder außer -C($R^3$, $R^4$ )-Radikalen auch Ether, N-Alkyl-oder N-Aryl-iminogruppen sein können, und anschließend mit einem Halogenoder Säureanhydridgruppen aufweisenden Terminierungsreagens umsetzt.

Man kann die geschilderten Nachteile somit vermeiden, wenn man anstelle von Ethylenoxid oder -sulfid zunächst mit einem speziellen Verkappungsreagenz umsetzt, das zu Lithiumamiden von Polymeren führt, die am Kettenende mindestens eine Aminogruppe enthalten. Geeignete Reagenzien werden in der EP-A-211 395 und der EP-244 603 vorgeschlagen. Anschließend wird das Terminierungsreagenz zugegeben, wobei ein am Kettenende funktionalisiertes Polymeres erhalten wird, das die gewünschten polymerisierbaren Gruppen in Ausbeuten von mehr als 80 Gew.-% enthält.

Die besonders interessierenden, am Kettenende funktionalisierten Polymeren, auch Makromonomeren genannt, bestehen aus solchen Monomeren, die anionisch mit Alkyllithiuminitiatoren polymerisiert werden können. Dies sind z.B. alle vinylaromatischen Verbindungen wie Styrol, alpha-Methylstyrol, Vinyltoluol und seine Isomeren, vinylungesättigte Amide wie N,N-Dialkylamide, z.B. N,N-Dimethylacrylamid, ferner Acrylnitril, Methacrylnitril, niedere Alkyl- und Allylacrylate und -methacrylate, einschließend Methyl- und t-Butylacrylat und -methacrylat, Vinylpyridine, Diene usw. Der oben benutzte Begriff "niedere" soll dabei organische Gruppen bezeichnen, die 8 oder weniger C-Atome je Molekül enthalten. Die bevorzugten Vinylaromaten enthalten 8-12 C-Atome. Ganz besonders bevorzugt sind Styrol und dessen im Kern oder in alpha-Stellung durch Alkylgruppen substituierte Derivate, sowie Butadien, Isopren und 2,3-Dimethylbutadien.

Die anionische Polymerisation mit alkalimetallorganischen Verbindungen ist als Verfahren so bekannt, daß sie hier nicht weiter erörtert werden muß (vgl. z.B. GB-Patent 1 444 680 oder Journal of Applied Polymer Science 22, [1978], 2007-2913). Das Zahlenmittel des Molekulargewichts der erfindungsgemäßen Polymeren liegt zwischen 300 und 500 000, vorzugsweise zwischen 1000 und 180 000.

Als Verkappungsreagens zur Einführung der aminischen Endgruppen werden erfindungsgemaß Diaziridine der vorstehend beschriebenen Art verwendet; diese Verbindungen Ia und Ib sind an sich bekannt; sie sind z.B. von R. 0hme et al in Chemische Berichte 99 (1966), 2104-2109 oder von E. Schmitz und K. Schinkovsky in Chemische Berichte 97 (1964), 49 beschrieben. Die Umsetzung mit den lebenden Polymeren erfolgt im allgemeinen in Gegenwart eines inerten polaren oder unpolaren Lösungsmittels, bevorzugt in Abwesenheit von Wasser und in inerter Atmosphäre. Besonders gut geeignet als Verkappungsreagenz für das erfindungsgemäße Verfahren sind bicyclische Diaziridine wie I,5-Diaza-bicyclo[3,1,0]-hexan und seine Alkylderivate. Sie ermöglichen im folgenden Terminierungsschritt auch die Einführung mehrerer polymerisierbarer Endgruppen.

Die verkappten makromolekularen Ketten werden in Anschluß an die Verkappung mit dem Terminierungsreagenz umgesetzt. Hierzu sind geeignet Halogenverbindungen oder Carbon- oder Dicarbonsäureanhydride, die gleichzeitig eine polymerisierbare Endgruppe enthalten, z.B. eine Olefingruppe oder eine 0xiran- oder eine Thiirangruppe. Brauchbare Halogen enthaltende Terminierungsreagentien schließen ein: Vinylhaloalkylether, in denen die Alkylgruppe 6 oder weniger C-Atome enthält wie Methyl-, Hexyl- und deren Isomeren; Vinylester von Halogenalkylcarbonsäuren, in denen diese Alkylgruppe 6 oder weniger C-Atome enthält wie Essig-, Propion-, Butan- bis Hexancarbonsäure; ferner 0lefinhalogenide mit 6 oder weniger C-Atomen wie Vinylhalogenid, Allyl-, Methallyl, 6-Halo-1-Hexen usw.; ferner Halogenide von Dienen wie 2-Halogen-methyl-1,3-Butadien, Epihalohydrine, Haloalkylmaleinsäureanhydride, bzw. deren Ester, Vinylhaloalkylsilane; ferner Vinylhaloalkylaryle wie Vinylbenzylchlorid. Die Halogengruppe kann Chlor, Brom, Jod oder Fluor sein, bevorzugt jedoch Chlor.

Besonders brauchbare halogenierte Verbindungen für die Terminierung sind Chlormethylstyrol wie das o, m, p-Derivat bzw. deren Mischungen, ferner Acrylsäure- oder Methacrylsäurechlorid sowie Epichlorhydrin.

Als Carbonsäure- oder Dicarbonsäureanhydride sind als Terminierungsreagenz geeignet z.B. Acrylsäureanhydrid, Methacrylsäureanhydrid, die Anhydride von Halogenalkylcarbonsäuren, in denen die Alkylgruppen 6 oder weniger C-Atome enthalten, wie z.B. Halogenacetanhydrid, alpha- oder $\beta$-Halogenpropionsäureanhydrid bis zum Halogenhexancarbonsäureanhydrid, ferner Maleinsäureanhydrid sowie deren alkylierte Derivate, ferner auch 2- Methylenbernsteinsäureanhydrid und Butadien-2,3-Dicarbonsäureanhydrid.

Das Verhältnis des Terminierungsreagenzes zum Lithiuminitiator sollte größer als eins sein. Ein Überschuß von mehr als dem 10fachen ist jedoch nicht sinnvoll, da er die Ausbeute nicht mehr erhöht und häufig nach der Reaktion entfernt werden muß. Im allgemeinen genügt ein Verhältnis von 1 : 1 bis 1 : 5, bevorzugt zwischen 1 : 1,1 bis 1 : 3.

Das makromolekulare Monomere kann aus dem Lösungsmittel, in dem es hergestellt wurde, nach irgendwelchen bekannten Methoden, wie Fällung mit Nichtlösungsmitteln, Verdampfung des Lösungsmittels in Verdampfern, Entgasungseinrichtungen wie Extrudern, oder durch Wasserdampfdestillation, abgetrennt werden. Die Isolierung und Gewinnung des makromolekularen Monomeren ist nicht Gegenstand der Erfindung. Wenn z.B. eine Copolymerisation des erfindungsgemäßen makromolekularen Monomeren mit einem Monomer vorgesehen ist, so braucht das makromolekulare Monomer nicht isoliert werden. Man gibt das 2. Monomer einfach zur Lösung und führt die Copolymerisation im gleichen Lösungsmittel durch, in dem das makromolekulare Monomere hergestellt wurde.

Die Konzentration im Lösungsmittel bei der Herstellung des makromolekularen Monomeren kann in weiten Grenzen schwanken. Sie wird technisch nur begrenzt durch die Fähigkeit, die Reaktionswärme abzuführen und die bei der Polymerisation entstehende viskose Lösung ausreichend zu durchmischen. Im allgemeinen wird aus diesen Gründen bei Konzentration zwischen 5 und 35 Gew.% Feststoff gearbeitet.

Als Lösungsmittel sind u.a. geeignet aliphatische, cycloaliphatische und aromatische Kohlenwasserstoffe wie n-Hexan, n-Heptan, Cyclohexan,und Toluol.

Es können jedoch auch andere inerte Lösungsmittel benützt werden wie Tetrahydrofuran, Diethylether.

Die Polymerisationstemperatur hängt vom Monomeren ab, aber im allgemeinen wird die Polymerisation zwischen -100 °C und +100 °C, bevorzugt zwischen -10 °C und +90 °C durchgeführt.

Die Verkappungs- sowie die Terminierungsreaktion wird im allgemeinen bei Temperaturen zwischen -10 °C und 70 °C, vorzugsweise zwischen 0 °C und 50 °C durchgeführt. Darunter verläuft die Reaktion sehr langsam, darüber nehmen unerwünschte Nebenreaktionen sehr stark zu.

Als Polymerisationsinitiatoren brauchbare Alkyllithiumverbindungen sind z.B. n-Butyllithium, sec.-Butyllithium, wie sie von der Industrie geliefert werden. Die benötigte Menge liegt zwischen 0,1 - 200 mmol Katalysator je mol Monomer, in Abhängigkeit vom gewünschten Molekulargewicht.

Es können auch Dilithiumverbindungen als Katalysatoren eingesetzt werden. Dann entstehen an beiden Kettenenden die polymerisierbaren Endgruppen.

Die nach der vorliegenden Erfindung hergestellten makromolekularen Monomeren können mit anderen Monomeren nach üblichen Methoden copolymerisiert werden, z.B. unter Verwendung von radikalischen, anionischen oder kationischen Initiatoren, soweit sie geeignet sind für die jeweiligen Endgruppe des makromolekularen Monomeren und das benützte Monomer.

Epoxyterminierte makromolekulare Monomere können z.B. kationisch initiiert mit Tetrahydrofuran copolymerisieren. Ähnlich können mit Chlormethylstyrol terminierte makromolekulare Monomere radikalisch z.B. mit Styrol, Acrylnitril, Methylmethacrylat oder Acrylaten copolymerisieren, wobei auch Mischungen dieser oder ähnlicher Monomerer Verwendung finden können. Die entstehenden Pfropfcopolymeren können zwischen 1 und 95 Gew.-% des makromolekularen Monomeren und zwischen 99 und 5 Gew.-% der Comonomeren enthalten. Die Möglichkeiten für solche Copolymerisationen werden z.B. im US-Patent 3 786 116 aufführlich beschrieben.

Die Erfindung wird durch die folgenden Beispiele näher erläutert, die jedoch keine Begrenzung darstellen.

Ausgangsstoffe und Lösungsmittel werden jeweils so gereinigt, wie es dem Fachmann bekannt ist für die Verwendung bei der anionischen Polymerisation.

Beispiel 1

Herstellung eines epoxyterminierten Polystyrols mit dem Molgewicht 5000

a) Herstellung des mit Propylendiaziridin verkappten Polymeren

In einem unter Reinstickstoff mit einer Lösung von sec.-Butyllithium in Cyclohexan gespülten 2-Liter-Dreihalskolben, der mit Rührer, Thermometer und einer Gummimembran versehen ist, werden 1000 $cm^3$ Cyclohexan und 104 g (1 mol) gereinigtes Styrol gegeben.

Bei 50 °C wird mit einer Injektionsspritze unter gutem Rühren so lange eine 1,4 M Lösung von sec.-Butyllithium in Cyclohexan zu der Styrollösung gegeben, bis eine bleibende schwache Orangefärbung entsteht. Unmittelbar darauf werden weitere 21 mmol sec.-Butyllithium zugegeben. Die jetzt intensiv orange gefärbte Lösung erwärmt sich. Nach einer Stunde bei 70 °C ist die Polymerisation beendet. Die Lösung wird bei 40 °C mit einer 50 gew.-%igen Lösung von 1,5-Diaza-bicyclo-[3,1,0]-hexan in Toluol mittels einer Injektionsspritze durch die Gummimembran titriert. Nach Zugabe von 3,7 $cm^3$ ist die orange Farbe verschwunden, und das mit 1,5-Diaza-bicyclo[3,1,0]-hexan verkappte Polymer ist entstanden. Durch potentiometrische Titration mit Perchlorsäure in einer Mischung von Chlorbenzol/Eisessig einer durch Fällen mit Alkohol, Lösen in Toluol und erneutes Fällen mit Alkohol gereinigten Probe wird ein Gehalt an Basenstickstoff von 0,57 Gew.-% bestimmt. Gesamtstickstoff nach Kjeldahl: 0,59 Gew.-%.

Molekulargewicht (MGW) durch Gelpermeationschromatographie (GPC) = 5100, Mw/Mn = 1,07.

b) Terminierung

Zur Lösung gemäß a) wurden bei 40 °C 65 mmol Epichlorhydrin gegeben. Nach einer Stunde wurde das Cyclohexan im Wasserbad verdampft, zuletzt unter Anlegen eines Vakuums. Nach Abkühlen verbleibt eine glasartige schaumige Schmelze.

Beispiel 2:

Kationische Copolymerisation des Polymeren aus Beispiel 1 mit Tetrahydrofuran (THF).

Der Rückstand von Beispiel 1 wird in 1,5 l Tetrahydrofuran gelöst. Nach Abkühlen auf 0 °C werden zur kationischen Copolymerisation 2,5 g Propylenoxid und 100 mmol Bortrifluoridätherat zugegeben.

Nach 6 Stunden hat sich eine Reaktionsmischung gebildet, in der laut GPC-Charakterisierung 75 Gew.-% des Polystyrolmakromonomeren als Copolymerisat mit THF der Zusammensetzung 32/68 (Flächenprozent) Styrol/THF vorliegen.

Beispiel 3

Herstellung eines vinylphenylterminierten 2-Blockcopolymeren aus 17 Gew.-% Styrol und 83 Gew.-% Butadien des Molgewichts 550000

a) Herstellung des aminterminierten Blockcopolymeren

Zur Herstellung eines 1-Blockcopolymeren aus 17 Gew.-% Styrol und 83 Gew.-% Butadien mit Diaminoendgruppen wird ein mit Rührer, Thermometer, Rückflußkühler, Gummimembran und Heizmantel versehener 6 l-Reaktor mit Cyclohexan, das 2 $cm^3$ sec.-Butyllithium enthält, unter Reinstickstoff zur Reinigung ausgekocht. Nach Ablassen dieser Lösung wird der Reaktor mit 3000 $cm^3$ Cyclohexan und 0,9 mol = 93,6 g Styrol beschickt. Mit Hilfe einer Injektionsspritze wird bei 40 °C so lange eine

Lösung von sec.-Butyllithium zudosiert, bis eine leichte Orangefarbe anzeigt, daß alle Verunreinigung verbraucht sind. Darauf werden 12 mmol sec.-Butyllithium zugegeben und eine Stunde bei 65° C das Styrol auspolymerisiert. Sodann läßt man 10,2 mol Butadien, das durch Abdestillieren von Butyllithium gereinigt wurde, nach und nach bei dieser Temperatur zulaufen. Eine Stunde nach Beendigung des Zulaufs setzt man mit einer Spritze 2 $cm^3$ Styrol zu. Die während der Polymerisation des Butadiens fast farblose Lösung färbt sich nach einer weiteren Stunde bei 65° C orange. Nach GPC wird ein Molekulargewicht aus dem Gewichtsmittel $M_w$ von 55000 ermittelt. Durch Zugabe von 1,5-Diaza-bicyclo-[3,1,0]-hexan (50 gew.-%ige Lösung in Toluol) aus einer kalibrierten Injektionsspritze wird auf farblos titriert. Es werden 1,85 $cm^3$ (= 11 mmol bzw. 0,924 g) der Lösung benötigt. Der Stickstoffgehalt nach Kjeldahl beträgt 0,047 Gew.-% (Theorie 0,05 Gew.-%).

b) Terminierung mit Chlormethylstyrol

Die Lösung nach a) wird bei 40° C mit 30 mmol Chlormethylstyrol versetzt. Nach einer Stunde wird auf 60° C erwärmt. Nach einer weiteren Stunde wird das Polymer durch Eingießen der Lösung unter intensivem Rühren in 10 l Äthanol gefällt. Das abgetrennte Polymer wird im Trockenschrank bei 50° C und 10 mbar über Nacht getrocknet. Es werden 600 g eines glasklaren, plastischen Polymerkuchens gewonnen.

Beispiel 4

Thermische Copolymerisation des Polymeren aus Beispiel 3 mit Styrol.

100 g des Copolymeren aus Beispiel 3 werden in 400 g Monostyrol gelöst und unter Stickstoff in einem mit Rührer versehenen 2 l Glaskolben im Ölbad nach folgendem Temperaturprogramm polymerisiert.

4 Std. 80° C
2 Std. 90° C
4 Std. 100° C

Der Rührer wird nach 6 Std. aus der hochviskosen Schmelze herausgezogen.

Nach Beendigung der Polymerisation wird abgekühlt und der Kolben zerschlagen. Das entstandene hochschlagzähe Polystyrol wird gemahlen und im Vakuumtrockenschrank bei 1 mbar und 50° C nicht umgesetztes Styrol entfernt.

Styrolumsatz 91 Gew.-%

Das Polymer wird durch GPC charakterisiert. 92 Gew.-% des Vinylphenyl-terminierten Blockcopolymeren sind in das Polymer eingebaut.

Beispiel 5

Herstellung eines Acrylsäure-terminierten Polyisoprens mit dem Molgewicht 6000

In der Apparatur gemäß Beispiel 3 wird in 3000 $cm^3$ Cyclohexan 540 g Isopren (gereinigt über Ca-hydrid) mit ca. 80 mmol sec.-Butyllithium polymerisiert. Nach Beendigung der Polymerisation werden 2 $cm^3$ Styrol zugegeben. Nach einer weiteren Stunde wird bei 40° C mit 17 $cm^3$ einer 50 gew.-%igen, 1,5-Diaza-bicyclo-[3,1,0]-hexanlösung auf farblos titriert.

Molgewicht des Polyisoprens Mw aus GPC (gemessen vor der Verkappung): 6000.

Stickstoffgehalt nach Kjedahl: 0,5 Gew.-% (Theorie 0,5 Gew.-%)

Die Polymerlösung wird bei 40° C mit 0,1 Mol Acrylsäurechlorid umgesetzt. Nach einer Stunde wird die Lösung unter gutem Rühren in 6 l Äthanol eingegossen. Das abeschiedene Öl wird abgetrennt und 2 mal mit je 2 l Äthanol ausgerührt, zuletzt unter Zugabe von 10 g Di-t-butyl-p-kresol. Das Öl wird bei 50° C und 10 mbar im Trockenschrank über Nacht von anhaftendem Lösungsmittel befreit.

Ausbeute: 550 g.

Das Polymer zeigt eine Verseifungszahl von 9.

Radikalische Copolymerisation des acrylsäureterminierten Polyisoprens vom MGW 6000 mit n-Butylacrylat

50 g des Polymeren von Beispiel 5 werden in einem 2 l-Kolben unter Rühren in 750 cm Cyclohexan gelöst.

Nach Zugabe von 150 g n-Butylacrylat und 0,56 g Azoisobuttersäurenitril wird unter Stickstoff und Rühren 15 Stunden bei 60° C polymerisiert. Es entsteht eine opalisierende Lösung eines Pfropfcopolymeren aus Polyisopren und Polybutylacrylat. Das GPC zeigt, daß ca. 90 Gew.-% des am Anfang vorgelegten makromolekularen Monomeren in das Pfropfcopolymer eingebaut wurden.

Beispiel 7

Herstellung eines mit Maleinsäureanhydrid terminierten Polystyrols mit MGW 6000

Zunächst wird, wie unter Beispiel 1a beschrieben, ein mit Propylendiaziridin verkapptes Polystyrol hergestellt, jedoch wird nur mit 17 mmol sec.-Butyllithium gearbeitet. Das GPC ergibt ein MGW von 6000. Die Terminierung mit 1,5-Diaza-bicyclo-[3,10]-hexan ist nach Zugabe von 19 mmol vollständig (Entfärbung der Lösung). Zu der Lösung wird nun eine warme Lösung von 2,1 g Maleinsäureanhydrid in 30 $cm^3$ Toluol gegeben. Nach 1 Stunde bei 40° C wird die Lösung unter intensivem Rühren in 5 Liter Alkohol, der 2 $cm^3$ Eisessig enthält, eingegossen. Das feinpulvrige polymere

Makromonomer wird über eine Nutsche abgesaugt und mit Methanol neutral gewaschen und im Vakuumtrockenschrank bei 50 °C über Nacht getrocknet.

Stickstoffgehalt nach Kjeldahl: 0,48 %
Säurezahl: 9,5

Das so hergestellte makromolekulare Monomere wird bei radikalischer Copolymerisation mit Methylacrylat oder Styrol zu ca. 90 Gew.-% als Pfropfcopolymer eingebaut.

## Ansprüche

1. Verfahren zur Herstellung von an Kettenenden funktionalisierten Polymeren aus durch anionische Polymerisation von olefinisch ungesättigten Monomeren erhaltenen lebenden Polymeren, dadurch gekennzeichnet, daß man die lebenden Polymeren zunächst mit einem Verkappungsreagens der allgemeinen Formel Ia oder Ib umsetzt

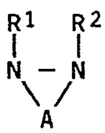 Ia, 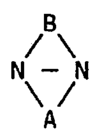 Ib,

worin $R^1$ und $R^2$ ein Alkyl- oder Arylrest, A = eine eingliedrige, gegebenenfalls substituierte Kohlenstoffbrücke und B eine 2- bis 12-gliedrige Brücke, von der mindestens die den Stickstoffatomen nächsten Glieder aus -C($R^3$, $R^4$)-Radikalen bestehen, wobei $R^3$ und $R^4$ gleich oder verschieden sein können und H, Alkyl-, Cycloalkyl- oder Arylreste sind und die entfernteren Glieder außer -C($R^3$, $R^4$)-Radikalen auch Ether, N-Alkyl- oder N-Aryl-iminogruppen sein können,
und
anschließend mit einem Halogen- oder Säureanhydridgruppen aufweisenden Terminierungsreagens umsetzt.

2. Verfahren nach Anspruch 1, dadurch gekennzeichnet, daß als Verkappungsreagens Ib eine Verbindung aus der Klasse des 1,5-Diazabicyclo[3,l,0]hexans und seiner alkylsubstituierten Derivate verwendet wird.

3. Verfahren nach Anspruch 1, dadurch gekennzeichnet, daß als Terminierungsreagens Chlormethylstyrol, Acryl- oder Methacrylsäurechlorid, Epichlorhydrin, Acryl-, Methacryl oder Maleinsäureanhydrid verwendet wird.

## Claims

1. A process for preparing a terminally functionalized polymer from a living polymer obtained by anionic polymerization of an olefinically unsaturated monomer, which comprises first reacting the living polymer with a capping agent of the general formula Ia or Ib

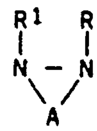 Ia, 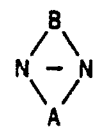 Ib,

where $R^1$ and $R^2$ are each alkyl or aryl, A is a singlemembered substituted or unsubstituted carbon bridge and B is a 2- to 12-membered bridge of which at least those members adjacent to the nitrogen atom comprise -C($R^3$,$R^4$) radicals, where $R^3$ and $R^4$ can be identical or different and are each H, alkyl, cycloalkyl or aryl, and the nonadjacent members can be not only -C($R^3$,$R^4$) radicals but also ether or N-alkyl- or N-aryl-imino groups, and then with a terminating agent which possesses halogen or acid anhydride groups.

2. A process as claimed in claim 1, wherein the capping agent Ib is a compound from the class of 1,5-diazabicyclo[3,1,0]hexane and alkyl-substituted derivatives thereof.

3. A process as claimed in claim 1, wherein the terminating agent used is chloromethylstyrene, acryloyl or methacryloyl chloride, epichlorohydrin, acrylic anhydride, methacrylic anhydride or maleic anhydride.

## Revendications

1. Procédé de préparation de polymère fonctionnalisés aux extrémités des chaînes à partir de polymères vivants, qui sont obtenus par la polymérisation anionique de monomères à insaturation oléfinique, caractérisé en ce que l'on fait d'abord réagir les polymères vivants sur un réactif de coiffage ou masquage de la formule générale Ia ou Ib

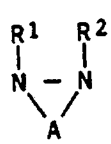 Ia, 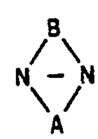 Ib,

dans laquelle $R^1$ et $R^2$ représentent chacun un radical alkyle ou aryle, A représente un pont

de carbone à un chaînon, éventuellement substitué et B représente des ponts qui comportent de 2 à 12 chaînons parmi lesquels au moins les chaînons voisins des atomes d'azote sont constitués par des radicaux -C($R^3$, $R^4$)- où $R^3$ et $R^4$ peuvent être identiques ou différents et représentent des atomes d'hydrogène, des radicaux alkyle, cycloalkyle ou aryle et les chaînons éloignés peuvent se composer, outre de radicaux -C($R^3$, $R^4$)-, également de groupes éther, N-alkyle ou N-aryle,
et
on fait ensuite réagir le produit sur un réactif de terminaison présentant des atomes d'halogènes ou des radicaux anhydride d'acide.

**2.** Procédé suivant la revendication 1, caractérisé en ce qu'à titre de réactif de coiffage ou masquage Ib, on utilise un composé qui appartient à la classe du 1,5-diaza-bicyclo[3,1,0] hexane et ses dérivés à substitution alkylique.

**3.** Procédé suivant la revendication 1, caractérisé en ce qu'à titre de réactif de terminaison, on utilise le chlorométhylstyrène, le chlorure de l'acide acrylique ou de l'acide méthacrylique, l'épichlorhydrine, l'anhydride de l'acide acrylique, de l'acide méthacrylique ou de l'acide maléique.